# EUROPEAN PATENT APPLICATION

(11) **EP 4 564 900 A1**
(43) Date of publication of application: **04.06.2025**
(21) Application number: 23881308.3
(22) Date of filing: 30.06.2023
(51) Int. Cl.: H04W 28/02, H04W 28/08

(54) **MULTI-CHANNEL DATA TRANSMISSION METHOD AND ELECTRONIC DEVICE**

(30) Priority: 27.10.2022 CN 202211325171
(71) Applicant: ZTE CORPORATION, Shenzhen, Guangdong 518057 (CN)
(72) Inventor: WANG, Cheng, Shenzhen, Guangdong 518057 (CN)
(74) Representative: Canzler & Bergmeier Patentanwälte Partnerschaft mbB
(86) International application number: PCT/CN2023/104839
(87) International publication number: WO 2024/087719

(57) **Abstract**

The present disclosure provides a multi-channel data transmission method. The method comprises: acquiring network parameters of a plurality of data channels and the current data load ratio of the plurality of data channels, the network parameters being influencing factors influencing the data transmission capability of the data channels; determining a target data load ratio of the plurality of data channels on the basis of the network parameters of the plurality of data channels and the current data load ratio of the plurality of data channels, wherein the current data load ratio and the target data load ratio each comprise a plurality of ratio grades; and correspondingly adjusting data loads of the data channels according to the target data load ratio of the plurality of data channels. The present disclosure further provides an electronic device.

## Description

### CROSS REFERENCE TO RELATED APPLICATIONS

The present disclosure claims the priority to Chinese Patent Application No. CN202211325171.2 entitled "MULTI-CHANNEL DATA TRANSMISSION METHOD AND ELECTRONIC DEVICE" and filed on October 27, 2022, the contents of which are incorporated herein by reference in their entirety.

### TECHNICAL FIELD

The present disclosure relates to the field of wireless network technology, and in particular, to a multi-channel data transmission method and an electronic device.

### BACKGROUND

With the development of digitization and informatization of the society, requirements on bandwidths of wireless data services become higher and higher. However, there is a technical problem that a single wireless data signal cannot provide stable data connection due to factors such as geographical factors, buildings, radio interference, and base station load capacity.

### SUMMARY

The present disclosure provides a multi-channel data transmission method and an electronic device.

In a first aspect, an embodiment of the present disclosure provides a multi-channel data transmission method, including: acquiring network parameters of a plurality of data channels and current data carrying capacity proportions of the plurality of data channels, the network parameters being influencing factors which affect data transmission capabilities of the data channels; determining target data carrying capacity proportions of the plurality of data channels based on the network parameters of the plurality of data channels and the current data carrying capacity proportions of the plurality of data channels, wherein the current data carrying capacity proportions and the target data carrying capacity proportions include a plurality of proportion levels; and correspondingly adjusting a data carrying capacity of each of the data channels according to the target data carrying capacity proportions of the plurality of data channels.

In a second aspect, an electronic device includes: at least one processor; and a storage device communicating with and connected to the at least one processor; wherein the storage device stores one or more computer programs executable by the at least one processor, and the one or more computer programs are executed by the at least one processor to enable the at least one processor to perform the multi-channel data transmission method provided in the first aspect.

### BRIEF DESCRIPTION OF DRAWINGS

In the drawings for the embodiments of the present disclosure:
FIG. 1 is a schematic diagram of an application scenario according to the present disclosure;
FIG. 2 is a flowchart illustrating a multi-channel data transmission method according to an embodiment of the present disclosure;
FIG. 3 is another flowchart illustrating a multi-channel data transmission method according to an embodiment of the present disclosure;
FIG. 4 is a block diagram of a multi-channel data transmission device according to an embodiment of the present disclosure; and
FIG. 5 is a block diagram of an electronic device according to an embodiment of the present disclosure.

### DETAIL DESCRIPTION OF EMBODIMENTS

In order to enable those of ordinary skill in the art to better understand the technical solutions of the present disclosure, a multi-channel data transmission method and device provided in the embodiments of the present disclosure are described in detail below with reference to the drawings.

The present disclosure will be described more fully below with reference to the drawings, but the embodiments illustrated may be embodied in different forms, and the present disclosure should not be interpreted as being limited to the embodiments described below. Rather, the embodiments are provided to make the present disclosure thorough and complete, and are intended to enable those of ordinary skill in the art to fully understand the scope of the present disclosure.

The drawings for the embodiments of the present disclosure are intended to provide a further understanding of the embodiments of the present disclosure and constitute a part of the specification. Together with the specific embodiments of the present disclosure, the drawings are used to explain the present disclosure, but do not constitute any limitation to the present disclosure. The above and other features and advantages will become more apparent to those of ordinary skill in the art from the description of the specific embodiments with reference to the drawings.

The present disclosure can be described with reference to plans and/or cross-sectional views with the aid of idealized schematic diagrams of the present disclosure. Accordingly, the exemplary drawings may be modified according to manufacturing techniques and/or tolerances.

All the embodiments of the present disclosure and the features therein may be combined with each other if no conflict is incurred.

The terms used herein are merely used to describe the specific embodiments, and are not intended to limit the present disclosure. The term "and/or" used herein includes any and all combinations of one or more associated listed items. The terms "one" and "the" used herein which indicate a singular form are intended to include a plural form, unless expressly stated in the context. The terms "include" and "be made of" used herein indicate the presence of the described features, integers, operations, elements and/or components, but do not exclude the presence or addition of one or more other features, integers, operations, elements, components and/or combinations thereof.

Unless otherwise defined, all terms (including technical and scientific terms) used herein have the same meaning as commonly understood by those of ordinary skill in the art. It should be further understood that terms, such as those defined in commonly used dictionaries, should be interpreted as having a meaning that is consistent with a meaning in the context of the related technology and the background of the present disclosure, and should not be interpreted in an idealized or overly formal sense unless expressly so defined herein

The present disclosure is not limited to the embodiments illustrated by the drawings, but includes modifications to configuration formed based on a manufacturing process. Thus, regions shown in the drawings are illustrative, and shapes of the regions shown in the drawings illustrate specific shapes of regions of elements, but are not intended to make limitations.

With the development of digitization and informatization of the society, requirements on bandwidths of wireless data services become higher and higher. However, there is a technical problem that a single wireless data signal cannot provide stable data connection due to factors such as geographical factors, buildings, radio interference, and base station load capacity. Therefore, those of ordinary skill in the art propose the data fusion technology for two or more wireless data links.

The data aggregation technology includes the Access Traffic Steering, Switching, and Splitting (ATSSS) technology introduced by the Multi-Path Transmission Control Protocol (MPTCP) and the 3rd Generation Partnership Project (3GPP). The MPTCP is a TCP evolution protocol generated for adapting to multipath transmission, and can be added to a solution at an upper layer of an operating system, and the MPTCP subflow can transmit data through different Internet Protocol (IP) links, and the links may be Non-3GPP-access (such as WiFi links) and 3GPP access (wireless data links).

The ATSSS technology includes at least three capabilities, i.e., selecting an optimal network by measuring bandwidths and delays; realizing smooth switching between wireless data connection and WiFi connection to avoid data flow lagging; and splitting data transmission into wireless data connection and WiFi connection to realize common transmission through fusion of the two connections.

The ATSSS technology introduces a relevant protocol to a terminal and a network side, the terminal and the network side realize data fusion by accessing a User Plane Function (UPF) of the network side through 3GPP and non-3GPP, the UPF serves as a gateway to forward data to any address of the Internet, a Service Management Function (SMF) of the network side issues an ATSSS rule to the UPF and the terminal, and the terminal and the UPF perform data transmission according to the ATSSS rule.

However, when data transmission is performed using the ATSSS technology, a data bandwidth of a wireless data link may be unstable due to signal disturbance and hopping, and if a data carrying capacity of the wireless data link cannot be adjusted, data aggregation efficiency of the wireless data link may be reduced.

In a multi-channel data transmission process, a data bandwidth and a congestion change of each channel may affect a data aggregation (fusion) effect. Therefore, a data carrying capacity of each channel needs to be adjusted according to network parameters of each channel, so as to improve the data aggregation effect of multi-channel data transmission.

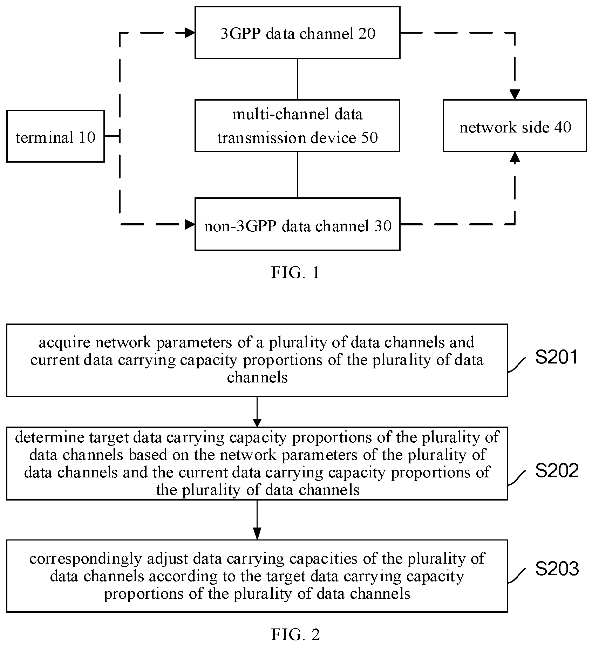

FIG. 1 is a schematic diagram of an application scenario according to the present disclosure. In FIG. 1, the solid lines represent control signals, and the dotted lines represent data transmission signals. As shown in FIG. 1, a terminal 10 is connected to a network side 40 through a 3GPP data channel 20 and a non-3GPP data channel 30, and the 3GPP data channel 20 and the non-3GPP data channel 30 may provide data services for the terminal 10 at the same time. When the 3GPP data channel 20 and the non-3GPP data channel 30 provide the data services for the terminal 10, a multi-channel data transmission device 50 may adjust data carrying capacity proportions of the 3GPP data channel 20 and the non-3GPP data channel 30, so as to maximize data transmission rates of the 3GPP data channel 20 and the non-3GPP data channel 30, thereby improving a data aggregation effect of the 3GPP data channel 20 and the non-3GPP data channel 30.

The terminal 10 is a terminal which supports multi-channel data transmission, and may be a vehicle-mounted device, a User Equipment (UE), a mobile device, a user terminal, a terminal, a cellular phone, a cordless phone, a Personal Digital Assistant (PDA), a handheld device, a computing device, an on-board device, a wearable device, or the like.

The 3GPP data channel 20 may be a data channel provided by a 3GPP access device, such as a data channel provided by a 2G/3G/4G/5G mobile network. The non-3GPP data channel 30 may be a wireless-local-area-network data channel, such as a data channel provided by WiFi, Zigbee or other wireless access devices.

**In** a first aspect, an embodiment of the present disclosure provides a multi-channel data transmission method, which can improve aggregation efficiency of multi-channel data transmission.

FIG. 2 is a flowchart illustrating a multi-channel data transmission method according to an embodiment of the present disclosure. As shown in FIG. 2, an embodiment of the present disclosure provides a multi-channel data transmission method, which includes operations S201 to S203.

At operation S201, network parameters of a plurality of data channels and current data carrying capacity proportions of the plurality of data channels are acquired.

The network parameters are data channel influencing factors which affect data transmission capabilities of the data channels, and are bases for adjustment of data carrying capacities of the data channels. The data carrying capacity refers to a data volume of data transmitted by the data channel, and the larger the data carrying capacity of the data channel is, the better the data transmission capability of the data channel is, and the smaller the data carrying capacity of the data channel is, the poorer the data transmission capability of the data channel is.

In some embodiments, the data channel influencing factor includes at least one of received power, transmission rate, signal interference, frequency band bandwidth, network type, routing congestion of network devices, network device load, or generation of network technology.

At operation S202, target data carrying capacity proportions of the plurality of data channels are determined based on the network parameters of the plurality of data channels and the current data carrying capacity proportions of the plurality of data channels.

The current data carrying capacity proportions and the target data carrying capacity proportions include a plurality of proportion levels. When a proportion level of a current data carrying capacity proportion is different from that of a target data carrying capacity proportion, the current data carrying capacity proportion is replaced with the target data carrying capacity proportion. When the proportion level of the current data carrying capacity proportion is the same as that of the target data carrying capacity proportion, the current data carrying capacity proportion is kept unchanged, or it may be considered that the current data carrying capacity proportion is replaced with the target data carrying capacity proportion, but the target data carrying capacity proportion is equal to the current data carrying capacity proportion, so that the current data carrying capacity proportion is not changed.

In some embodiments, each proportion level corresponds to a data carrying capacity proportion. The larger the number of the proportion levels is, the smaller the difference between the data carrying capacity proportions corresponding to two adjacent proportion levels is, the smaller the data-carrying-capacity adjustment amount corresponding to the data channels is, the smoother the adjustment process is. The smaller the number of the proportion levels is, the larger the difference between the data carrying capacity proportions corresponding to two adjacent proportion levels is, the larger the data-carrying-capacity adjustment amount corresponding to the data channels is, resulting in an unsmooth adjustment process.

For double data channels, e.g., a mobile-network data channel (Cellular) and a wireless-local-area-network data channel (Wlan), five proportion levels, i.e., LEVEL1 to LEVEL5, are set. In Table 1, a data carrying capacity of the mobile-network data channel is 0 at LEVEL1, but a data carrying capacity of the wireless-local-area-network data channel is not 0 at any proportion level, which is favorable to the wireless-local-area-network data channel, that is, prioritizing the use of the wireless-local-area-network data channel.

**Table 1**

| proportion level | Cellular | Wlan |
|---|---|---|
| LEVEL1 | 0 | 1 |
| LEVEL2 | 0.2 | 0.8 |
| LEVEL3 | 0.5 | 0.5 |
| LEVEL4 | 0.7 | 0.3 |
| LEVEL5 | 0.9 | 0.1 |

For three data channels, e.g., a mobile-network data channel (Cellular), a primary wireless-local-area-network data channel (primary Wlan), and a secondary wireless-local-area-network data channel (secondary Wlan), six proportion levels, i.e., LEVEL1 to LEVEL6, are set. In Table 2, a data carrying capacity of each wireless-local-area-network data channel is 0 at LEVEL1, but neither a data carrying capacity of the primary mobile-network data channel nor a data carrying capacity of the secondary mobile-network data channel is 0 at any proportion level, which is also favorable to the wireless-local-area-network data channels.

**Table 2**

| proportion level | Cellular | primary Wlan | secondary Wlan |
|---|---|---|---|
| LEVEL1 | 0 | 0.5 | 0.5 |
| LEVEL2 | 0.1 | 0.6 | 0.3 |
| LEVEL3 | 0.2 | 0.5 | 0.3 |
| LEVEL4 | 0.4 | 0.3 | 0.3 |
| LEVEL5 | 0.6 | 0.3 | 0.1 |
| LEVEL6 | 0.7 | 0.2 | 0.1 |

It should be noted that the proportion levels of the data carrying capacity proportions in the present disclosure are described by taking the double channels and the three channels as examples, but the present disclosure is not limited thereto. The multi-channel data transmission method provided in the present disclosure is also applicable to more than three data channels.

At operation S203, data carrying capacities of the plurality of data channels are correspondingly adjusted according to the target data carrying capacity proportions of the plurality of data channels.

When the target data carrying capacity proportions are different from the current data carrying capacity proportions, the target data carrying capacity proportions may be achieved by changing a data carrying capacity of one of the plurality of data channels or by simultaneously adjusting a data carrying capacity of each of the plurality of data channels.

In the multi-channel data transmission method provided in the embodiments of the present disclosure, the current data carrying capacity proportions and the target data carrying capacity proportions include the plurality of proportion levels, the target data carrying capacity proportions of the plurality of data channels are determined based on the acquired network parameters of the plurality of data channels and the acquired current data carrying capacity proportions of the plurality of data channels, and then the data carrying capacity of each data channel is adjusted according to the target data carrying capacity proportions, so that each data channel can adaptively adjust the data carrying capacity thereof to adapt to situations of a network to which each data channel belongs, thereby improving the data aggregation efficiency of multi-channel data transmission.

In some embodiments, before the operation S201 of acquiring the network parameters of the plurality of data channels and the current data carrying capacity proportions of the plurality of data channels, the method further includes: determining initial data carrying capacity proportions of the plurality of data channels based on a relationship between the data channel influencing factors and bandwidths of the plurality of data channels.

The initial data carrying capacity proportions are initial data carrying capacity proportions of the plurality of data channels, and the plurality of data channels perform data transmission according to the initial data carrying capacity proportions.

In some embodiments, the initial data carrying capacity proportions may be at any arbitrarily set proportion level. However, in order to endow each data channel with high data aggregation efficiency in an initial stage, according to the embodiments of the present disclosure, the initial data carrying capacity proportions of the plurality of data channels are determined based on the relationship between the data channel influencing factors and the bandwidths of the plurality of data channels; and since the bandwidths of the data channels are relatively stable parameters, the initial data carrying capacity proportions determined based on the bandwidths of the data channels can adapt to network states of the respective data channels as much as possible.

In some embodiments, determining the initial data carrying capacity proportions of the plurality of data channels based on the relationship between the data channel influencing factors and the bandwidths of the plurality of data channels includes: determining a main influencing factor based on the relationship between the data channel influencing factors and the bandwidths of the data channels; and determining the initial data carrying capacity proportions of the plurality of data channels based on the main influencing factor.

In some embodiments, the main influencing factor may be selected from one or more aspects including influences of the data channel influencing factors on the bandwidths of the data channels, influence time of the data channel influencing factors on the bandwidths of the data channels, user concern, and product demand focus. When the data channel influencing factor includes at least one of received power, transmission rate, signal interference, frequency band bandwidth, network type, routing congestion of network devices, network device load, or generation of network technology, the received power may be taken as the main influencing factor, that is, the initial data carrying capacity proportions of the plurality of data channels are determined based on the received power.

It should be noted that how to determine the main influencing factor is also adjusted when the factors such as network environment and network device status are changed, in other words, the main influencing factor does not remain constant.

In some embodiments, when the plurality of data channels include a wireless-local-area-network data channel and a mobile-network data channel, the operation S202 of determining the target data carrying capacity proportions of the plurality of data channels based on the network parameters of the plurality of data channels and the current data carrying capacity proportions of the plurality of data channels includes:
correcting signal strength of the wireless-local-area-network data channel based on a network parameter of the wireless-local-area-network data channel; correcting signal strength of the mobile-network data channel based on a network parameter of the mobile-network data channel; and determining the target data carrying capacity proportions of the wireless-local-area-network data channel and the mobile-network data channel based on the corrected signal strength of the wireless-local-area-network data channel, the corrected signal strength of the mobile-network data channel, and the current data carrying capacity proportions of the wireless-local-area-network data channel and the mobile-network data channel.

The signal strength of the wireless-local-area-network data channel and the signal strength of the mobile-network data channel are affected by the other data channel influencing factors than the main influencing factor, so that the signal strength of the wireless-local-area-network data channel is corrected according to the network parameter of the wireless-local-area-network data channel, the signal strength of the mobile-network data channel is corrected according to the network parameter of the mobile-network data channel, and then the target data carrying capacity proportions of the wireless-local-area-network data channel to the mobile-network data channel are determined according to the corrected signal strength of the mobile-network data channel and the corrected signal strength of the wireless-local-area-network data channel.

In some embodiments, when the data channel influencing factor has a linear characteristic, the data channel influencing factor is divided into a plurality of sections of influencing factors, and the plurality of sections of influencing factors and the plurality of data channels correspond to the plurality of proportion levels according to a preset rule.

The data channel influencing factor having the linear characteristic refers to that the data channel influencing factor has the characteristic of linear growth or linear regression relative to a data transmission rate of the data channel.

In some embodiments, the plurality of data channels includes a first data channel and a second data channel which are configured to transmit data. In some embodiments, the first data channel includes a wireless-local-area-network data channel, and the second data channel includes a mobile-network data channel.

Illustratively, the signal strength has the linear characteristic relative to a data transmission rate of the data channel. When an effective value range of the signal strength of the wireless-local-area-network data channel is from -44 dBm to -140 dBm, the signal strength of the wireless-local-area-network data channel is divided into strong signal strength, medium signal strength, and weak signal strength. As shown in Table 3, a threshold of the strong signal strength is -95 dBm, and a threshold of the weak signal strength is -105 dBm. When an effective value range of the signal strength of the mobile-network data channel is from -10 dBm to -120 dBm, the signal strength of the mobile-network data channel is divided into strong signal strength, medium signal strength, and weak signal strength. As shown in Table 3, a threshold of the strong signal strength is -50 dBm, and a threshold of the weak signal strength is -70 dBm.

**Table 3**

| | strong signal strength | medium signal strength | weak signal strength |
|---|---|---|---|
| wireless-local-area-network data channel | -44 dBm to -95 dBm | -95 dBm to -105 dBm | -105 dBm to -140 dBm |
| mobile-network data channel | -10 dBm to -50 dBm | -50 dBm to -70 dBm | -70 dBm to -120 dBm |

The signal strength of each of the two data channels in Table 3 is divided into three sections, and the three sections of the signal strength and the types of the data channels correspond to the proportion levels of the two data channels according to a preset rule. Table 4 is a corresponding relationship table of the three sections of the signal strength of the two types of data channels and the proportion levels of the two data channels.

**Table 4**

| wireless-local-area-network data channel | mobile-network data channel | proportion level |
|---|---|---|
| low signal strength | low signal strength | LEVEL3 |
| low signal strength | medium signal strength | LEVEL4 |
| low signal strength | strong signal strength | LEVEL5 |
| medium signal strength | low signal strength | LEVEL1 |
| medium signal strength | medium signal strength | LEVEL2 |
| medium signal strength | strong signal strength | LEVEL3 |
| strong signal strength | low signal strength | LEVEL1 |
| strong signal strength | medium signal strength | LEVEL1 |
| strong signal strength | strong signal strength | LEVEL2 |

When the network parameter is signal interference, the signal interference is corrected to be signal strength, a proportion level is then determined according to the corresponding relationship between the signal strength and the proportion level, and a data carrying capacity proportion is further determined.

For the wireless-local-area-network data channel, a signal-to-interference-plus-noise ratio is the signal interference of the wireless-local-area-network data channel. Correcting the signal strength of the wireless-local-area-network data channel based on the network parameter of the wireless-local-area-network data channel includes:
when the signal-to-interference-plus-noise ratio is less than or equal to a first preset threshold, correcting the signal strength of the wireless-local-area-network data channel to be the weak signal strength; when the signal-to-interference-plus-noise ratio is greater than the first preset threshold and less than a second preset threshold, correcting, if the signal strength of the wireless-local-area-network data channel is the strong signal strength, the strong signal strength to be the medium signal strength, and keeping, if the signal strength of the wireless-local-area-network data channel is the medium signal strength or the weak signal strength, the signal strength of the wireless-local-area-network data channel unchanged; and when the signal-to-interference-plus-noise ratio is greater than the second preset threshold, keeping, if the signal strength of the wireless-local-area-network data channel is the strong signal strength or the weak signal strength, the signal strength of the wireless-local-area-network data channel unchanged, and correcting, if the signal strength of the wireless-local-area-network data channel is the medium signal strength, the medium signal strength to be the strong signal strength.

Illustratively, a value range of the signal-to-interference-plus-noise ratio SINR is from -23 dB to 40 dB, the signal-to-interference-plus-noise ratio SINR is divided into three sections using the first preset threshold and the second preset threshold, the first preset threshold is 0 dB, the second preset threshold is 5 dB, the signal-to-interference-plus-noise ratio SINR is corrected to be the signal strength, and Table 5 shows a relationship between the signal-to-interference-plus-noise ratio SINR and the correction of the signal strength.

**Table 5**

| SINR | SNR | correction of signal strength |
|---|---|---|
| -23 dB to 0 dB | -20 dB to 0 dB | strong -> weak |
| | | medium -> weak |
| | | weak: unchanged |
| 0 dB to 5 dB | 0 dB to 5 dB | strong -> medium |
| | | medium: unchanged |
| | | weak: unchanged |
| 5 dB to 40 dB | 5 dB to 30 dB | strong: unchanged |
| | | medium -> strong |
| | | weak: unchanged |

For the mobile-network data channel, a signal to noise ratio is the signal interference of the mobile-network data channel, and correcting the signal strength of the wireless-local-area-network data channel based on the network parameter of the wireless-local-area-network data channel includes: when the signal to noise ratio is less than or equal to the first preset threshold, correcting the signal strength of the mobile-network data channel to be the weak signal strength; when the signal to noise ratio is greater than the first preset threshold and less than the second preset threshold, correcting, if the signal strength of the mobile-network data channel is the strong signal strength, the strong signal strength to be the medium signal strength, and keeping, if the signal strength of the mobile-network data channel is the medium signal strength or the weak signal strength, the signal strength of the mobile-network data channel unchanged; and when the signal to noise ratio is greater than the second preset threshold, keeping, if the signal strength of the mobile-network data channel is the strong signal strength or the weak signal strength, the signal strength of the mobile-network data channel unchanged, and correcting, if the signal strength of the mobile-network data channel is the medium signal strength, the medium signal strength to be the strong signal strength.

Illustratively, a value range of the signal to noise ratio SNR is from -20 dB to 30 dB, the signal to noise ratio SNR is divided into three sections using the first preset threshold and the second preset threshold, the first preset threshold is 0 dB, the second preset threshold is 5 dB, the signal-to-interference-plus-noise ratio SINR is corrected to be the signal strength, and Table 5 shows a relationship between the signal to noise ratio SINR and the correction of the signal strength.

**In** some embodiments, the network parameter is frequency band bandwidth. A frequency band bandwidth of the wireless-local-area-network data channel includes 1.4 MHz, 3 MHz, 5 MHz, 10 MHz, 15 MHz, and 20 MHz, a 5G frequency band bandwidth covers a 4G frequency band bandwidth range, a millimeter-wave single-carrier bandwidth may reach a maximum of 100 MHz, the frequency band bandwidth is linearly related to rate, the lower the frequency band bandwidth is, the better the penetrability is, and the higher the frequency band bandwidth is, the poorer the penetrability is. A default frequency band bandwidth of a router is generally 20 MHz.

Correcting the signal strength of the wireless-local-area-network data channel based on the network parameter of the wireless-local-area-network data channel includes: when the frequency band bandwidth of the wireless-local-area-network data channel is less than a third preset threshold, correcting the signal strength of the wireless-local-area-network data channel to be the weak signal strength.

Illustratively, the signal strength of the wireless-local-area-network data channel is corrected according to the frequency band bandwidth, and when the frequency band bandwidth is less than the third preset threshold (e.g., 20 MHz), a theoretical bandwidth of the wireless-local-area-network data channel can basically meet requirements, so that the signal strength may not need to be corrected.

A frequency band bandwidth of the mobile-network data channel includes 1.4 MHz, 3 MHz, 5 MHz, 10 MHz, 15 MHz, and 20 MHz, a 5G frequency band bandwidth covers a 4G frequency band bandwidth range, a millimeter-wave single-carrier bandwidth may reach a maximum of 100 MHz, the frequency band bandwidth is linearly related to rate, and the lower the frequency band bandwidth is, the more the wireless resources are, the higher the transmission rate is.

Correcting the signal strength of the mobile-network data channel based on the network parameter of the mobile-network data channel includes: when the frequency band bandwidth of the mobile-network data channel is greater than a fourth preset threshold, keeping the signal strength of the mobile-network data channel unchanged.

Illustratively, the signal strength of the mobile-network data channel is corrected according to the frequency band bandwidth, and when the frequency band bandwidth is less than the fourth preset threshold (e.g., 5 MHz), the signal strength of the wireless-local-area-network data channel is corrected to be the weak signal strength in order to avoid a case of strong signal and low bandwidth.

In some embodiments, the network parameter is data transmission rate. In some embodiments, a data transmission rate of each data channel is monitored, for example, traffic sampling is performed on the wireless-local-area-network data channel Wlan and the mobile-network data channel Cellular every two seconds, the data transmission rates are calculated, and the data carrying capacity proportions are adjusted according to the data transmission rates.

Determining the target data carrying capacity proportions of the plurality of data channels based on the network parameters of the plurality of data channels and the current data carrying capacity proportions of the plurality of data channels includes: obtaining corresponding data carrying capacity proportions based on the data transmission rate of the wireless-local-area-network data channel and the data transmission rate of the mobile-network data channel; comparing the data carrying capacity proportions with the current data carrying capacity proportions to obtain a comparison result; and counting the comparison result, and determining the target data carrying capacity proportions of the wireless-local-area-network data channel and the mobile-network data channel based on a counting result.

Illustratively, data traffic and a target data transmission rate of the wireless-local-area-network data channel and data traffic and a target data transmission rate of the mobile-network data channel are respectively acquired and calculated every two seconds. The target data carrying capacity proportions of the current wireless-local-area-network data channel and the current mobile-network data channel are calculated according to the target data transmission rates, the target data carrying capacity proportions are compared with the current data carrying capacity proportions, and the data carrying capacity of each data channel is adjusted according to a comparison result.

In some embodiments, the comparison result is counted, and the target data carrying capacity proportions of the wireless-local-area-network data channel and the mobile-network data channel are determined based on the counting result.

Illustratively, taking the mobile-network data channel as an example, if the target data carrying capacity proportion is larger than the current data carrying capacity proportion by 0.3, it is indicated that an actual data transmission rate of the mobile-network data channel is high, and the proportion of the mobile-network data channel needs to be increased, so one vote is cast for raising the proportion level of the mobile-network data channel. Within a plurality of consecutive voting periods (e.g., 2s), if more than 50% of votes are cast for raising the proportion level, the proportion level of the mobile-network data channel is raised. On the contrary, for the wireless-local-area-network data channel, if the target data carrying capacity proportion is larger than the current data carrying capacity proportion by 0.3, it is indicated that an actual data transmission rate of the wireless-local-area-network data channel is high, and the proportion set for the wireless-local-area-network data channel needs to be increased, so the proportion level LEVEL needs to be lowered. Similarly, when more than 50% of votes, the proportion level is raised, that is, the proportion level is lowered.

In some embodiments, the network parameter is network type. Network types of the mobile-network data channel include 2G, 3G, 4G, and 5G, and network types of the wireless-local-area-network data channel include 2.4 GHz and 5 GHz. If the network type of the mobile-network data channel is 5G and the network type of the wireless-local-area-network data channel is 2.4 GHz, the data carrying capacity of the mobile-network data channel needs to be increased, so that the proportion level of the mobile-network data channel needs to be raised, such as:
LEVEL2 -> LEVEL3
LEVEL3 -> LEVEL4
LEVEL4 -> LEVEL5

If the network type of the wireless-local-area-network data channel is 5 GHz and the network type of the mobile-network data channel is 4G, the data carrying capacity of the wireless-local-area-network data channel needs to be increased, so that the proportion level of the wireless-local-area-network data channel needs to be lowered, such as:
LEVEL5 -> LEVEL4
LEVEL4 -> LEVEL3
LEVEL3 -> LEVEL2

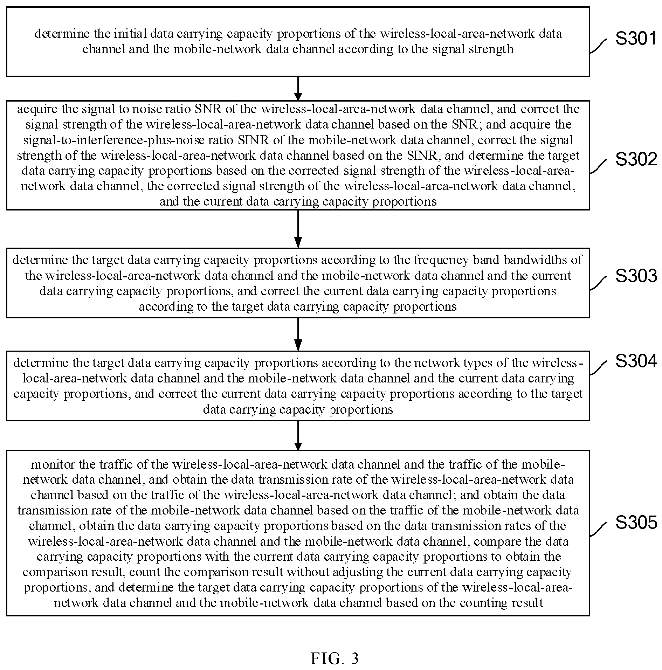

In order to enable a better understanding of the multi-channel data transmission method provided in the present disclosure, the multi-channel data transmission method is described below by taking a case where the wireless-local-area-network data channel is a WiFi data channel and the mobile-network data channel is a cellular data channel as an example. As shown in FIG. 3, the multi-channel data transmission method includes operations S301 to S305. At operation S301, the initial data carrying capacity proportions of the wireless-local-area-network data channel and the mobile-network data channel are determined according to the signal strength. The initial data carrying capacity proportions may be determined according to the signal strength of the wireless-local-area-network data channel and the signal strength of the mobile-network data channel with reference to Table 3.

At operation S302, the signal to noise ratio SNR of the wireless-local-area-network data channel is acquired, and the signal strength of the wireless-local-area-network data channel is corrected based on the SNR; and the signal-to-interference-plus-noise ratio SINR of the mobile-network data channel is acquired, the signal strength of the wireless-local-area-network data channel is corrected based on the SINR, and the target data carrying capacity proportions are determined based on the corrected signal strength of the wireless-local-area-network data channel, the corrected signal strength of the wireless-local-area-network data channel, and the current data carrying capacity proportions.

At operation S302, the signal strength of the wireless-local-area-network data channel and the signal strength of the wireless-local-area-network data channel are corrected with reference to Table 5, and then the target data carrying capacity proportions are determined the current data carrying capacity proportions with reference to Table 4.

At operation S303, the target data carrying capacity proportions are determined according to the frequency band bandwidths of the wireless-local-area-network data channel and the mobile-network data channel and the current data carrying capacity proportions, and the current data carrying capacity proportions are corrected according to the target data carrying capacity proportions.

Illustratively, if the frequency band bandwidth of the wireless-local-area-network data channel is less than 5 GHz, it is indicated that the signal strength of the wireless-local-area-network data channel is lower at this time, so that the data carrying capacity of the wireless-local-area-network data channel needs to be reduced. If the frequency band bandwidth of the mobile-network data channel is greater than 50 MHz, the data carrying capacity of the mobile-network data channel needs to be increased, so that the proportion level may be lowered according to Table 1.

At operation S304, the target data carrying capacity proportions are determined according to the network types of the wireless-local-area-network data channel and the mobile-network data channel and the current data carrying capacity proportions, and the current data carrying capacity proportions are corrected according to the target data carrying capacity proportions.

For example, when the network type of the mobile-network data channel is changed from 5G to 4G, the data carrying capacity of the mobile-network data channel needs to be reduced, so that the proportioning level needs to be lowered. When the network type of the wireless-local-area-network data channel is changed from 2.4 GHz to 5 GHz, the data carrying capacity of the wireless-local-area-network data channel needs to be increased, so that the proportion level needs to be lowered.

At operation S305, the traffic of the wireless-local-area-network data channel and the traffic of the mobile-network data channel are monitored, and the data transmission rate of the wireless-local-area-network data channel is obtained based on the traffic of the wireless-local-area-network data channel; and the data transmission rate of the mobile-network data channel is obtained based on the traffic of the mobile-network data channel, the data carrying capacity proportions are obtained based on the data transmission rates of the wireless-local-area-network data channel and the mobile-network data channel, the data carrying capacity proportions are compared with the current data carrying capacity proportions to obtain the comparison result, at this time, the comparison result is counted without adjusting the current data carrying capacity proportions, and the target data carrying capacity proportions of the wireless-local-area-network data channel and the mobile-network data channel are determined based on the counting result. When the counting result is that 50% of the votes are cast for raising the proportion level of the wireless-local-area-network data channel, the proportion level is lowered.

It should be noted that, when the initial data carrying capacity proportions of the plurality of data channels are determined based on the main influencing factor and the current data carrying capacity proportions are adjusted, an adjustment range of the data carrying capacity proportions may be one level, that is, the data carrying capacity proportion is raised or lowered by one level each time. The adjustment range of the data carrying capacity proportions may be two or more levels, that is, the data carrying capacity proportion is raised or lowered by multiple levels each time, the adjustment range of the data carrying capacity proportions is determined according to the network parameters and the current data carrying capacity proportions, and is not limited in the present disclosure.

In some embodiments, the multi-channel data transmission method includes acquiring the network parameters and the current data carrying capacity proportions of the plurality of data channels in real time; determining the target data carrying capacity proportions of the plurality of data channels based on the real-time network parameters of the plurality of data channels and the current data carrying capacity proportions of the plurality of data channels; and then correspondingly adjusting the data carrying capacity of each data channel according to the target data carrying capacity proportions of the plurality of data channels. With the network parameters and the current data carrying capacity proportions of the plurality of data channels acquired in real time, each channel can adjust the data carrying capacity thereof in time in a self-adaptive manner according to network states, thereby improving the data aggregation efficiency of multi-channel data transmission.

In a second aspect, an embodiment of the present disclosure provides a multi-channel data transmission device, which can improve aggregation efficiency of multi-channel data transmission.

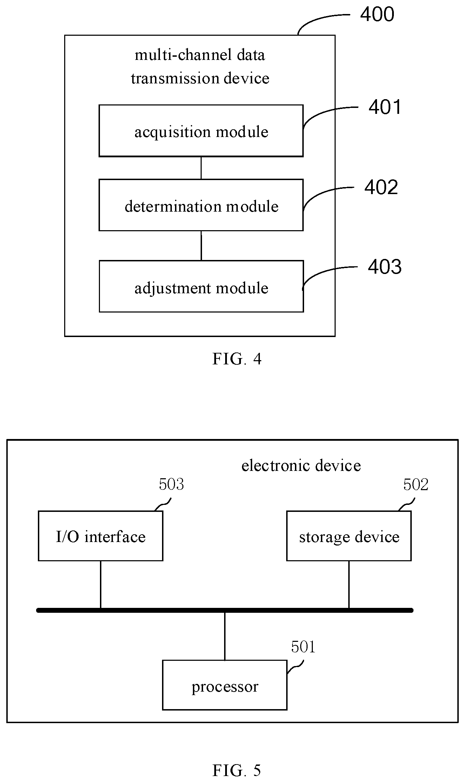

FIG. 4 is a block diagram of a multi-channel data transmission device according to an embodiment of the present disclosure. As shown in FIG. 4, a multi-channel data transmission device 400 includes: an acquisition module 401, a determination module 402, and an adjustment module 403. The acquisition module 401 is configured to acquire network parameters of a plurality of data channels and current data carrying capacity proportions of the plurality of data channels; and the network parameters are data channel influencing factors which affect data transmission capabilities of the data channels. The determination module 402 is configured to determine target data carrying capacity proportions of the plurality of data channels based on the network parameters of the plurality of data channels and the current data carrying capacity proportions of the plurality of data channels. The current data carrying capacity proportions and the target data carrying capacity proportions include a plurality of proportion levels. The adjustment module 403 is configured to correspondingly adjust a data carrying capacity of each of the plurality of data channels according to the target data carrying capacity proportions of the plurality of data channels.

According to the multi-channel data transmission device provided in the embodiment of the present disclosure, the current data carrying capacity proportions and the target data carrying capacity proportions include the plurality of proportion levels, the acquisition module acquires the network parameters of the plurality of data channels and the current data carrying capacity proportions of the plurality of data channels, the determination module determines the target data carrying capacity proportions of the plurality of data channels based on the network parameters of the plurality of data channels and the current data carrying capacity proportions of the plurality of data channels, and the adjustment module adjusts the data carrying capacity of each data channel according to the target data carrying capacity proportions, so that each data channel can adaptively adjust the data carrying capacity thereof to adapt to situations of a network to which each data channel belongs, thereby improving the data aggregation efficiency of multi-channel data transmission.

In some embodiments, the determination module 402 is further configured to determine initial data carrying capacity proportions of the plurality of data channels based on a relationship between the data channel influencing factors and bandwidths of the plurality of data channels.

In some embodiments, the determination module 402 is further configured to determine a main influencing factor based on the relationship between the data channel influencing factors and the bandwidths of the data channels, and determine the initial data carrying capacity proportions of the plurality of data channels based on the main influencing factor.

In some embodiments, the data channel influencing factor includes at least one of received power, transmission rate, signal interference, frequency band bandwidth, network type, routing congestion of network devices, network device load, or generation of network technology.

In some embodiments, the plurality of data channels includes a wireless-local-area-network data channel and a mobile-network data channel.

The determination module 402 corrects signal strength of the wireless-local-area-network data channel based on a network parameter of the wireless-local-area-network data channel, corrects signal strength of the mobile-network data channel based on a network parameter of the mobile-network data channel, and determines the target data carrying capacity proportions of the wireless-local-area-network data channel and the mobile-network data channel based on the corrected signal strength of the wireless-local-area-network data channel, the corrected signal strength of the mobile-network data channel, and the current data carrying capacity proportions of the wireless-local-area-network data channel and the mobile-network data channel.

In some embodiments, the network parameter is signal interference; signal interference of the wireless-local-area-network data channel is a signal-to-interference-plus-noise ratio; and signal interference of the mobile-network data channel is a signal to noise ratio.

The determination module 402 is further configured to correct, when the signal-to-interference-plus-noise ratio is less than or equal to a first preset threshold, the signal strength of the wireless-local-area-network data channel to be weak signal strength; when the signal-to-interference-plus-noise ratio is greater than the first preset threshold and less than a second preset threshold, correct, if the signal strength of the wireless-local-area-network data channel is strong signal strength, the strong signal strength to be medium signal strength, and keep, if the signal strength of the wireless-local-area-network data channel is the medium signal strength or the weak signal strength, the signal strength of the wireless-local-area-network data channel unchanged; and when the signal-to-interference-plus-noise ratio is greater than the second preset threshold, keep, if the signal strength of the wireless-local-area-network data channel is the strong signal strength or the weak signal strength, the signal strength of the wireless-local-area-network data channel unchanged, and correct, if the signal strength of the wireless-local-area-network data channel is the medium signal strength, the medium signal strength to be the strong signal strength.

The determination module 402 is further configured to correct the signal strength of the mobile-network data channel based on a network parameter of the mobile-network data channel, which includes: when the signal to noise ratio is less than or equal to the first preset threshold, correcting the signal strength of the mobile-network data channel to be weak signal strength; when the signal to noise ratio is greater than the first preset threshold and less than the second preset threshold, correcting, if the signal strength of the mobile-network data channel is strong signal strength, the strong signal strength to be medium signal strength, and keeping, if the signal strength of the mobile-network data channel is the medium signal strength or the weak signal strength, the signal strength of the mobile-network data channel unchanged; and when the signal to noise ratio is greater than the second preset threshold, keeping, if the signal strength of the mobile-network data channel is the strong signal strength or the weak signal strength, the signal strength of the mobile-network data channel unchanged, and correcting, if the signal strength of the mobile-network data channel is the medium signal strength, the medium signal strength to be the strong signal strength.

The multi-channel data transmission device provided in the present disclosure can be used to implement any embodiment of the multi-channel data transmission method provided in the present disclosure, and the corresponding technical solutions and the description thereof may be found in the corresponding description of the method embodiments, and thus will not be repeated here.

In some embodiments, the multi-channel data transmission device includes one or more of a terminal and a network-side device. The terminal may be a vehicle-mounted device, a UE, a mobile device, a user terminal, a terminal, a cellular phone, a cordless phone, a PDA, a handheld device, a computing device, an on-board device, a wearable device, or the like. The network-side device may be a router, a gateway, a switch, or the like.

FIG. 5 is a block diagram of an electronic device according to an embodiment of the present disclosure.

Referring to FIG. 5, an embodiment of the present disclosure provides an electronic device, which includes: at least one processor 501, at least one storage device 502, and one or more input/output (I/O) interfaces 503 connected between the processor 501 and the storage device 502. The storage device 502 stores one or more computer programs executable by the at least one processor 501, and the one or more computer programs are executed by the at least one processor 501 to enable the at least one processor 501 to perform the multi-channel data transmission method described above.

It should be understood by those of ordinary skill in the art that the functional modules/units in all or some of the operations, systems and devices disclosed above may be implemented as software, firmware, hardware, or suitable combinations thereof.

If implemented as hardware, the division between the functional modules/units stated above is not necessarily corresponding to the division of physical components; and for example, one physical component may have a plurality of functions, or one function or operation may be performed through cooperation of several physical components.

Some or all of the physical components may be implemented as software executed by a processor, such as a Central Processing Unit (CPU), a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable media used in any method or technology for storing information (such as computer-readable instructions, data structures, program modules and other data). The computer storage medium includes, but is not limited to, a Random Access Memory (RAM, more specifically, a Synchronous Dynamic RAM (SDRAM), a Double Data Rate SDRAM (DDR SDRAM), etc.), a Read Only Memory (ROM), an Electrically Erasable Programmable Read-Only Memory (EEPROM), a flash memory (FLASH) or other magnetic storage devices; a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication media generally include computer-readable instructions, data structures, program modules, or other data in modulated data signals such as carrier wave or other transmission mechanism, and may include any information delivery medium.

The present disclosure provides the multi-channel data transmission method and the electronic device for improving the data aggregation efficiency of wireless data links. In the multi-channel data transmission method provided in the embodiments of the present disclosure, the current data carrying capacity proportions and the target data carrying capacity proportions include the plurality of proportion levels, the target data carrying capacity proportions of the plurality of data channels are determined based on the acquired network parameters of the plurality of data channels and the acquired current data carrying capacity proportions of the plurality of data channels, and then the data carrying capacity of each data channel is adjusted according to the target data carrying capacity proportions, so that each data channel can adaptively adjust the data carrying capacity thereof to adapt to situations of a network to which each data channel belongs, thereby improving the data aggregation efficiency of multi-channel data transmission.

The present disclosure discloses exemplary embodiments using specific terms, but the terms are merely used and should be merely interpreted as having general illustrative meanings, rather than for the purpose of limitation. Unless expressly stated, it is apparent to those of ordinary skill in the art that features, characteristics and/or elements described in connection with a particular embodiment can be used alone or in combination with features, characteristics and/or elements described in connection with other embodiments. Therefore, it should be understood by those of ordinary skill in the art that various changes in the forms and the details can be made without departing from the scope of the present disclosure as set forth in the appended claims.

## Claims

1. A multi-channel data transmission method, comprising:
acquiring network parameters of a plurality of data channels and current data carrying capacity proportions of the plurality of data channels; the network parameters being influencing factors which affect data transmission capabilities of the plurality of data channels;
determining target data carrying capacity proportions of the plurality of data channels based on the network parameters of the plurality of data channels and the current data carrying capacity proportions of the plurality of data channels; wherein the current data carrying capacity proportions and the target data carrying capacity proportions comprise a plurality of proportion levels; and
correspondingly adjusting a data carrying capacity of each of the plurality of data channels according to the target data carrying capacity proportions of the plurality of data channels.

2. The method of claim 1, wherein before acquiring the network parameters of the plurality of data channels and the current data carrying capacity proportions of the plurality of data channels, the method further comprises:
determining initial data carrying capacity proportions of the plurality of data channels based on a relationship between the influencing factors of the plurality of data channels and bandwidths of the plurality of data channels.

3. The method of claim 2, wherein determining the initial data carrying capacity proportions of the plurality of data channels based on the relationship between the influencing factors of the plurality of data channels and the bandwidths of the plurality of data channels comprises:
determining a main influencing factor based on the relationship between the influencing factors of the plurality of data channels and the bandwidths of the plurality of data channels; and
determining the initial data carrying capacity proportions of the plurality of data channels based on the main influencing factor.

4. The method of any one of claims 1 to 3, wherein the influencing factors of the plurality of data channels comprise at least one of received power, transmission rate, signal interference, frequency band bandwidth, network type, routing congestion of network devices, network device load, or generation of network technology.

5. The method of any one of claims 1 to 3, wherein, in a case where the influencing factors of the plurality of data channels have a linear characteristic, the influencing factors of the plurality of data channels are divided into a plurality of sections of influencing factors, and the plurality of sections of influencing factors and the plurality of data channels correspond to the plurality of proportion levels according to a preset rule.

6. The method of claim 1, wherein the plurality of data channels comprise a first data channel and a second data channel which are configured to transmit data.

7. The method of claim 6, wherein the first data channel comprises a wireless-local-area-network data channel, and the second data channel comprises a mobile-network data channel.

8. The method of claim 7, wherein determining the target data carrying capacity proportions of the plurality of data channels based on the network parameters of the plurality of data channels and the current data carrying capacity proportions of the plurality of data channels comprises:
correcting signal strength of the wireless-local-area-network data channel based on a network parameter of the wireless-local-area-network data channel;
correcting signal strength of the mobile-network data channel based on a network parameter of the mobile-network data channel; and
determining the target data carrying capacity proportions of the wireless-local-area-network data channel and the mobile-network data channel based on the corrected signal strength of the wireless-local-area-network data channel, the corrected signal strength of the mobile-network data channel, and the current data carrying capacity proportions of the wireless-local-area-network data channel and the mobile-network data channel.

9. The method of claim 8, wherein the network parameter is signal interference; signal interference of the wireless-local-area-network data channel is a signal-to-interference-plus-noise ratio; and signal interference of the mobile-network data channel is a signal to noise ratio;
correcting the signal strength of the wireless-local-area-network data channel based on the network parameter of the wireless-local-area-network data channel comprises:
in a case where the signal-to-interference-plus-noise ratio is less than or equal to a first preset threshold, correcting the signal strength of the wireless-local-area-network data channel to be weak signal strength;
in a case where the signal-to-interference-plus-noise ratio is greater than the first preset threshold and less than a second preset threshold, if the signal strength of the wireless-local-area-network data channel is strong signal strength, correcting the strong signal strength to be medium signal strength; and if the signal strength of the wireless-local-area-network data channel is the medium signal strength or the weak signal strength, keeping the signal strength of the wireless-local-area-network data channel unchanged;
in a case where the signal-to-interference-plus-noise ratio is greater than the second preset threshold, if the signal strength of the wireless-local-area-network data channel is the strong signal strength or the weak signal strength, keeping the signal strength of the wireless-local-area-network data channel unchanged; and if the signal strength of the wireless-local-area-network data channel is the medium signal strength, correcting the medium signal strength to be the strong signal strength; and/or,
correcting the signal strength of the mobile-network data channel based on the network parameter of the mobile-network data channel comprises:
in a case where the signal to noise ratio is less than or equal to the first preset threshold, correcting the signal strength of the mobile-network data channel to be weak signal strength;
in a case where the signal to noise ratio is greater than the first preset threshold and less than the second preset threshold, if the signal strength of the mobile-network data channel is strong signal strength, correcting the strong signal strength to be medium signal strength; and if the signal strength of the mobile-network data channel is the medium signal strength or the weak signal strength, keeping the signal strength of the mobile-network data channel unchanged; and
in a case where the signal to noise ratio is greater than the second preset threshold, if the signal strength of the mobile-network data channel is the strong signal strength or the weak signal strength, keeping the signal strength of the mobile-network data channel unchanged; and if the signal strength of the mobile-network data channel is the medium signal strength, correcting the medium signal strength to be the strong signal strength.

10. The method of claim 7, wherein the network parameter is frequency band bandwidth;
correcting the signal strength of the wireless-local-area-network data channel based on the network parameter of the wireless-local-area-network data channel comprises:
in a case where a frequency band bandwidth of the wireless-local-area-network data channel is less than a third preset threshold, correcting the signal strength of the wireless-local-area-network data channel to be weak signal strength; and/or,
correcting the signal strength of the mobile-network data channel based on the network parameter of the mobile-network data channel comprises:
in a case where a frequency band bandwidth of the mobile-network data channel is greater than a fourth preset threshold, keeping the signal strength of the mobile-network data channel unchanged.

11. The method of claim 7, wherein the network parameter is data transmission rate;
determining the target data carrying capacity proportions of the plurality of data channels based on the network parameters of the plurality of data channels and the current data carrying capacity proportions of the plurality of data channel s comprises:
obtaining corresponding data carrying capacity proportions based on a data transmission rate of the wireless-local-area-network data channel and a data transmission rate of the mobile-network data channel;
comparing the data carrying capacity proportions with the current data carrying capacity proportions to obtain a comparison result; and
counting the comparison result, and determining the target data carrying capacity proportions of the wireless-local-area-network data channel and the mobile-network data channel based on a counting result.

12. An electronic device, comprising:
at least one processor; and
a storage device communicating with and connected to the at least one processor; wherein,
the storage device stores one or more computer programs executable by the at least one processor, and the one or more computer programs are executed by the at least one processor to enable the at least one processor to perform the multi-channel data transmission method of any one of claims 1 to 11.
